# EUROPÄISCHE PATENTSCHRIFT

(11) **EP 4 438 278 B1**
(45) Veröffentlichungstag und Bekanntmachung des Hinweises auf die Patenterteilung: **22.04.2026**
(21) Anmeldenummer: 24162951.8
(22) Anmeldetag: 12.03.2024
(51) Int. Cl.: B29C 73/02

(54) **ANDRUCKHÜLSE FÜR EINEN BEARBEITUNGSKOPF UND BEARBEITUNGSKOPFSYSTEM**
PRESSURE SLEEVE FOR A MACHINING HEAD AND MACHINING HEAD SYSTEM
MANCHON DE PRESSION POUR UNE TÊTE D'USINAGE ET SYSTÈME DE TÊTE D'USINAGE

(30) Priorität: 24.03.2023 DE 102023107550
(43) Veröffentlichungstag der Anmeldung: 02.10.2024
(73) Patentinhaber: Talon Technische Geräte GmbH, 64658 Fürth (DE)
(72) Erfinder: Grassinger, Dirk Mathias, 64658 Fürth (DE)
(74) Vertreter: Habermann Intellectual Property Partnerschaft von Patentanwälten mbB

(56) Entgegenhaltungen:
- DE-U1- 29 513 696
- US-A- 4 385 015
- US-A1- 2016 045 929

## Beschreibung

Die Erfindung betrifft ein Bearbeitungskopfsystem mit einer Andruckhülse für einen Bearbeitungskopf zum Einpressen eines Reparaturfluids in eine Schadstelle einer Glasscheibe, wobei die an der Schadstelle an die Glasscheibe andrückbare Andruckhülse in einer axialen Richtung hintereinander angeordnet einen Fluidkanalabschnitt und einen Kopplungsabschnitt aufweist, wobei die Andruckhülse im Bereich des Fluidkanalabschnitts ein Befestigungsmittel zum lösbaren Festlegen der Andruckhülse an oder in einem an der Glasscheibe festlegbaren Haltekörper aufweist, wobei sich in dem Fluidkanalabschnitt ein Fluidkanal in der axialen Richtung von dem Kopplungsabschnitt bis zu einer dem Kopplungsabschnitt gegenüberliegenden und an die Glasscheibe andrückbaren Austrittsöffnung erstreckt, wobei in dem Fluidkanal im Bereich der Austrittsöffnung eine Kolbendichtung angeordnet ist, mit welcher ein von dem Kopplungsabschnitt durch den Fluidkanal in Richtung der Austrittsöffnung hindurchragender Druckkolben reparaturfluiddicht zu dem umgebenden Fluidkanal abdichtbar ist, wobei ein Innendurchmesser des Fluidkanals an einem dem Kopplungsabschnitt zugewandten Ende des Fluidkanalabschnitts kleiner als ein Innendurchmesser des Innengewindes in dem Kopplungsabschnitt ist, wobei die Andruckhülse in dem Kopplungsabschnitt einen Innengewindeabschnitt mit einem Innengewinde aufweist, sodass ein Kopplungselement mit einem daran angepassten Außengewinde mit dem Innengewinde in Eingriff bringbar ist und durch Verdrehen in axialer Richtung verlagerbar ist, und wobei die Andruckhülse in einem Übergangsbereich zwischen dem Fluidkanalabschnitt und dem Kopplungsabschnitt eine in Umfangsrichtung umlaufend ausgebildete Anlagefläche aufweist, die dem Kopplungsabschnitt zugewandt ist und einen Dichtungssitz für eine an einem Kopplungselement angeordnete, in Umfangsrichtung umlaufende und in Richtung des Fluidkanalabschnitts vorspringende Kopplungsdichtung bildet.

Derartige Andruckhülsen, wie sie beispielsweise in US 2016/0045929 Al beschrieben sind, werden als Bestandteil eines Bearbeitungskopfes eines Bearbeitungskopfsystems verwendet, welches als Werkzeug für die Reparatur von Schadstellen in einer Glasscheibe verwendet wird. Ein solches Werkzeug weist üblicherweise einen Haltekörper auf, der beispielsweise mit einem Saugnapf oder mit mehreren Saugnäpfen auf einer Oberfläche der Glasscheibe festgelegt werden kann, die eine zu reparierende Schadstelle aufweist. Die Andruckhülse des Bearbeitungskopfes wird mit dem Befestigungsmittel, beispielsweise ein Schraubgewinde oder ein Bajonett-Anschluss, so an dem Haltekörper oder in einer Bohrung in dem Haltekörper festgelegt, dass die Austrittsöffnung der Andruckhülse überlappend mit der Schadstelle an die Oberfläche der Glasscheibe angedrückt wird. Vorab oder nach dem Anordnen der Andruckhülse auf der Oberfläche der Glasscheibe wird das Reparaturfluid so in den Fluidkanal der Andruckhülse eingefüllt, dass das Reparaturfluid durch die Austrittsöffnung aus der Fluidkanal in die Schadstelle fließen kann.

Um das Reparaturfluid möglichst vollständig in die Schadstelle einzupressen und zunächst noch in der Schadstelle befindliche Lufteinschlüsse zu entfernen wird üblicherweise das durch die Austrittsöffnung in die Schadstelle fließende Reparaturfluid abwechselnd mit einem Überdruck und mit Unterdruck beaufschlagt. Mit dem Überdruck wird das Reparaturfluid weitgehend und oftmals vollständig in die Schadstelle eingepresst und mit dem Unterdruck die in dem eingepressten Reparaturfluid zunächst noch eingeschlossenen Lufteinschlüsse herausgesaugt.

Für die Erzeugung des Überdrucks und des Unterdrucks kann der Bearbeitungskopf des Werkzeugs einen manuell verlagerbaren Druckkolben aufweisen, der von dem Kopplungsabschnitt aus durch den Fluidkanalabschnitt hindurch bis an die Austrittsöffnung heranragt und durch eine manuelle Betätigung in axialer Richtung verlagert werden kann, um abwechselnd im Bereich der Austrittsöffnung einen Überdruck und einen Unterdruck zu erzeugen. Es sind auch automatische Werkzeuge aus der Praxis bekannt, bei denen der dann üblicherweise einteilig ausgebildete Bearbeitungskopf über einen Pumpenschlauch mit einer Luftpumpe verbunden wird, mit welcher der Überdruck und der Unterdruck erzeugt werden kann. Bei der Pumpe kann es sich um eine manuell betätigbare Handpumpe oder aber um eine üblicherweise elektrisch betätigbare Druckluftpumpe handeln. Sowohl mit dem manuell verlagerbaren Druckkolben als auch mit den üblicherweise verwendeten Luftpumpen kann ein Überdruck bis zu etwa 4 bar bzw. 4 10⁵ Pa und ein Unterdruck bis etwa 0,8 bar bzw. 0,8 10⁵ Pa erzeugt werden.

Üblicherweise wird für die Reparatur von Schadstellen in der Glasscheibe ein Reparaturfluid verwendet, welches nach dem Einpressen in die Schadstelle ausgehärtet werden kann, indem beispielsweise das Reparaturfluid mit UV-Licht beleuchtet oder erwärmt wird. Für das Einpressen des Reparaturfluids wird üblicherweise einige Minuten Einpressdauer und für das Aushärten des Reparaturfluids ebenfalls einige Minuten Aushärtedauer benötigt.

Ein derartiges manuell betätigbares oder automatisch betriebenes Werkzeug, wie es beispielsweise in DE 295 13 696 U1, die ein Bearbeitungskopfsystem gemäß dem Oberbegriff des Anspruchs 1 zeigt, oder in US 4,385,015 offenbart ist, ist in vielen Werkstätten vorhanden, in denen Reparaturen von Schadstellen in Glasscheiben durchgeführt werden können. In vielen Fällen handelt es sich dabei um ein manuell betätigbares Werkzeug. Der Wechsel zu einem automatisch betriebenen Werkzeug erfordert regelmäßig den vollständigen Austausch des Werkzeugs und ist deshalb mit erheblichen Investitionen für die Werkstätten verbunden. Aus diesem Grund zögern viele Werkstätten den Wechsel und die Anschaffung eines automatisch betriebenen Werkzeugs hinaus, obwohl die Bedienung des automatisch betriebenen Werkzeugs einfacher ist und eine Scheibenreparatur zuverlässiger durchgeführt werden kann.

Es wird deshalb als eine Aufgabe der vorliegenden Erfindung angesehen, ein Bearbeitungskopfsystem mit einer Andruckhülse eines Bearbeitungskopfes so auszugestalten, dass mit einfachen Mitteln der Wechsel von einem manuell betätigbaren Bearbeitungskopfsystem zu einem automatisch betriebenen Bearbeitungskopfsystem durchgeführt werden kann.

Diese Aufgabe wird erfindungsgemäß mit einem Bearbeitungskopfsystem mit einer Andruckhülse mit den eingangs genannten Merkmalen gelöst, wobei das Bearbeitungskopfsystem ein als Pumpenadapter ausgebildetes Kopplungselement mit einem Außengewindeabschnitt mit einem an das Innengewinde der Andruckhülse angepasstes Außengewinde aufweist, wobei der Pumpenadapter an einem Anschlussende, welches bei einer bestimmungsgemäßen Festlegung des Pumpenadapters in dem Kopplungsabschnitt dem Fluidkanalabschnitt abgewandt ist und in axialer Richtung über die Andruckhülse hinausragt, eine Anschlusseinrichtung zum druckfesten Festlegen eines Pumpenschlauchs aufweist, und wobei der Pumpenadapter an einem dem Anschlussende gegenüberliegenden Abdichtungsende, welches bei einer bestimmungsgemäßen Festlegung in dem Kopplungsabschnitt der Andruckhülse dem Fluidkanalabschnitt zugewandt ist, eine in Richtung des Fluidkanalabschnitts vorspringende und in Umfangsrichtung umlaufende Kopplungsdichtung aufweist. Mit dem erfindungsgemäß ausgestalteten Bearbeitungskopfsystem ist es in einfacher Weise möglich, mit Hilfe einer Druckluftpumpe ein automatisch betriebenes Reparaturverfahren durchzuführen und dabei mehrere Komponenten eines Werkzeugs zu verwenden, die auch für die manuelle Durchführung des Reparaturverfahrens mit Hilfe eines manuell betätigten Druckkolbens benötigt werden.

Der erfindungsgemäße Pumpenadapter lässt sich in einfacher Weise zuverlässig und auch für hohe Einpressdrücke druckdicht in der Andruckhülse festlegen, um mit einem Pumpenschlauch einer Handpumpe oder einer automatisch betriebenen Druckluftpumpe verbunden zu werden, mit deren Hilfe der Einpressdruck erzeugt und das Reparaturfluid in die Schadstelle der Glasscheibe eingepresst wird. Da die Kopplungsdichtung in Richtung des Fluidkanalabschnitt vorspringt und in axialer Richtung an die Anlagefläche der Andruckhülse angedrückt wird, kann durch das Eindrehen des Pumpenadapters in das Innengewinde der Andruckhülse in dem Kopplungsabschnitt ohne größeren Handhabungsaufwand ein ausreichend großer Anpressdruck für die Kopplungsdichtung an die den Dichtungssitz bildende Anlagefläche der Andruckhülse erzeugt werden, um während der Durchführung des Reparaturverfahrens und der Erzeugung des Einpressdrucks für das Reparaturfluid eine zuverlässige Dichtungswirkung zwischen der Andruckhülse und dem darin festgelegten Pumpenadapter gewährleisten zu können.

Die derart ausgebildete Andruckhülse ist so ausgestaltet, dass die Andruckhülse in Verbindung mit einem entsprechend ausgestalteten Kopplungselement als Bearbeitungskopf sowohl für ein manuell betätigbares Werkzeug als auch für ein automatisch betriebenes Werkzeug verwendet werden kann. Es muss lediglich das jeweils verwendete und für die bestimmungsgemäße Verwendung mit der Andruckhülse verbundene Kopplungselement entweder als Kolbenadapter ausgebildet sein und einen manuell betätigbaren Druckkolben aufweisen, oder aber als Pumpenadapter ausgebildet sein und eine Anschlusseinrichtung für einen Pumpenschlauch einer Druckluftpumpe aufweisen.

Da die Andruckhülse für beide Verwendungsmöglichkeiten ausgestaltet und geeignet ist, können die Andruckhülse und auch der Haltekörper, mit welchem die Andruckhülse an die Glasscheibe angedrückt wird, sowie weitere Komponenten wie beispielsweise das Reparaturfluid sowie Einrichtungen zum Aushärten des in die Schadstelle eingepressten Reparaturfluids wahlweise für ein manuell durch Verlagerung des Druckkolbens durchgeführtes Reparaturverfahren oder aber für ein mit einer Druckluftpumpe manuell oder automatisch durchgeführtes Reparaturverfahren verwendet werden. Es müssen lediglich das jeweils gewünschte Kopplungselement sowie gegebenenfalls eine Handpumpe oder eine automatisch betätigbare Druckluftpumpe bereitgestellt werden, um für jeden Einzelfall das gewünschte Reparaturverfahren durchführen zu können. Wenn bereits alle erforderlichen Komponenten für ein manuell betätigbares Werkzeug vorhanden sind müssen lediglich ein als Pumpenadapter ausgebildetes Kopplungselement und eine Luftpumpe zusätzlich angeschafft werden und alle anderen Komponenten des Werkzeugs können für das automatisch betriebene Werkzeug weiterverwendet werden, was eine Umstellung auf ein automatisch betriebenes Reparaturverfahren und die Anschaffung der hierfür notwendigen Komponenten kostengünstig ermöglicht und begünstigt.

Zudem ist die Handhabung des Haltekörpers und der Andruckhülse für beide Reparaturverfahren gleich, sodass bei einer Umstellung des Reparaturverfahrens keine bzw. nur eine geringe Umgewöhnungszeit für die Handhabung des Werkzeugs erforderlich wird und das Risiko einer fehlerhaften Bedienung des Werkzeugs erheblich reduziert wird.

Untersuchungen haben ergeben, dass für eine besonders zuverlässige Reparatur unterschiedlicher Schadstellen in Glasscheiben das Reparaturfluid zweckmäßigerweise mit einem Überdruck von mehr als 5,5 bar, vorteilhafter Weise von mehr als 6 bar und in besonders vorteilhafter Weise von mehr als 6,5 bar in die Schadstelle eingepresst wird. Bei einem derart hoch vorgegebenen Einpressdruck dringt das Reparaturfluid auch in sehr feine Risse ein und füllt die Schadstelle vollständig aus, sodass nach dem Aushärten des eingepressten Reparaturfluids nicht nur eine auch in der Schadstelle mechanisch belastbare Glasscheibe erzeugt wird, sondern auch eine kaum oder nicht mehr sichtbare Beeinträchtigung der Transparenz der Glasscheibe im Bereich der Schadstelle zurückbleibt.

Erfindungsgemäß sind deshalb sowohl die Kolbendichtung der Andruckhülse als auch der Dichtungssitz der Andruckhülse so ausgebildet, dass der mit einem geeigneten Kopplungselement für eine bestimmungsgemäße Verwendung ausgestattete Bearbeitungskopf dafür eingerichtet und geeignet ist, das Reparaturfluid mit einem Überdruck von mehr als 5,5 10⁵ Pa, vorzugsweise mehr als 6 10⁵ Pa und besonders vorzugsweise mehr als 6,5 10⁵ Pa in die Schadstelle der Glasscheibe einzupressen. Zu diesem Zweck müssen auch die als manuell betätigbarer Kolbenadapter oder als automatisch betreibbarer Pumpenadapter ausgebildeten Kopplungselemente sowie eine gegebenenfalls verwendete Luftpumpe dafür eingerichtet und geeignet sein, einen solchen Überdruck zu erzeugen und mit diesem Überdruck das Reparaturfluid in die Schadstelle einzupressen.

Die in Umfangsrichtung umlaufend ausgebildete Anlagefläche bildet dabei nicht nur einen Dichtungssitz für die Kopplungsdichtung eines als Pumpenadapter ausgebildeten Kopplungselements, sondern auch einen die axiale Verlagerung begrenzende Anschlagsfläche für ein als Kolbenadapter ausgebildetes Kopplungselement, sodass eine Verlagerung eines der Glasscheibe zugewandten Endes des Druckkolbens des Kolbenadapters über die Austrittsöffnung hinaus und damit eine unerwünschte Beschädigung der zu reparierenden Glasscheibe zuverlässig ausgeschlossen werden können.

Einer Ausgestaltung des Erfindungsgedankens zufolge ist vorgesehen, dass die Kolbendichtung zwei oder mehr in Umfangsrichtung umlaufende und nach innen vorspringende Dichtungslamellen aufweist. Es hat sich gezeigt, dass die Dichtungswirkung von zwei oder mehr Dichtungslamellen, welche einen Ringspalt zwischen einem durch den Fluidkanal hindurch ragenden Druckkolben und einer Innenwandung des Fluidkanals auch bei hohen Drücken sowie zwischen Überdruck und Unterdruck wechselnden Druckverhältnissen zuverlässig abdichten kann. Gleichzeitig wird mit einer derart ausgebildeten Kolbendichtung das Einführen des Druckkolbens in den Fluidkanal und eine während der Durchführung des Reparaturverfahrens erforderliche axiale Verlagerung des Druckkolbens in dem Fluidkanal nicht behindert. Vorzugsweise weist die Kolbendichtung in axialer Richtung beabstandet zueinander zwei oder mehr Dichtungslamellen an einem dem Kopplungsabschnitt zugewandten Ende der Kolbendichtung sowie zwischen diesem Ende und der Austrittsöffnung der Andruckhülse zwei weitere Dichtungslamellen auf. Die Dichtungslamellen können jeweils radial nach innen ragen und entweder senkrecht zu der axialen Richtung oder aber in einem spitzen oder stumpfen Winkel zu der axialen Richtung ausgerichtet sein, um das Verlagern des daran anliegenden Druckkolbens zu erleichtern und die Dichtungswirkung zu verbessern.

Die Kolbendichtung ist zweckmäßigerweise aus einem geeigneten elastischen Material hergestellt, welches inert gegenüber dem verwendeten Reparaturfluid ist. Die Kolbendichtung kann gesondert hergestellt und nachträglich in eine daran angepasste Ausnehmung im Bereich der Austrittsöffnung der Andruckhülse eingesetzt und darin festgelegt werden. Nach der Durchführung eines Reparaturverfahrens kann die Andruckhülse mit der darin eingesetzten Kolbendichtung gereinigt werden, indem beispielsweise Druckluft durch den Fluidkanal hindurchgeblasen und dadurch eventuelle Rückstände des Reparaturfluids ausgetragen werden. Die gereinigte Andruckhülse kann für ein nachfolgendes Reparaturverfahren wiederverwendet werden.

Um die Handhabung des Werkzeugs zu erleichtern und zuverlässig zu verhindern, dass das Reparaturfluid während des Einpressens in die Schadstelle seitlich durch einen Spalt zwischen der Andruckhülse und der Glasscheibe austreten kann ist vorgesehen, dass die Kolbendichtung eine Andruckdichtungslippe aufweist, welche einen Öffnungsrand der Austrittsöffnung umgreift und beabstandet zu einer der Austrittsöffnung zugewandten ersten Dichtungslamelle angeordnet ist, sodass zwischen der Andruckdichtungslippe und der ersten Dichtungslamelle ein mit dem Reparaturfluid befüllbarer Vorratsraum gebildet wird. In diesen Vorratsraum kann beispielsweise nach der Verbindung der Andruckhülse mit einem Kolbenadapter und der Einführung des Druckkolbens in den Fluidkanal das Reparaturfluid eingefüllt werden und anschließend der mit dem Reparaturfluid befüllte Bearbeitungskopf in den Haltekörper eingesetzt und die Austrittsöffnung der Andruckhülse an die Schadstelle der Glasscheibe angedrückt werden. Anschließend kann das manuell durchgeführte Reparaturverfahren durch eine geeignete manuelle Verlagerung des Druckkolbens durchgeführt werden. Bei einer Verbindung der Andruckhülse mit einem Pumpenadapter kann der Bearbeitungskopf mit dem Haltekörper verbunden und auf die Glasscheibe aufgesetzt werden, um anschließend durch den Pumpenadapter das für die Reparatur benötigte Reparaturfluid durch den Fluidkanal bis in den Vorratsraum in der Kolbendichtung fließen zu lassen, bevor dann der Pumpenschlauch an dem Pumpenadapter festgelegt und mit Hilfe der Luftpumpe das Reparaturverfahren durchgeführt wird. Die nach innen ragenden Dichtungslamellen der Kolbendichtung behindern dabei weder das Einfüllen des Reparaturfluids durch das der Austrittsöffnung abgewandten Ende des Fluidkanals noch eine automatisch betriebene Durchführung des Reparaturverfahrens mit einer manuell betätigten Handpumpe oder mit einer automatisch betriebenen Druckluftpumpe.

Einer vorteilhaften Ausgestaltung des Erfindungsgedankens zufolge ist vorgesehen, dass das Innengewinde in dem Innengewindeabschnitt des Kopplungsabschnitts als mehrgängiges Innengewinde ausgebildet ist. Auf diese Weise kann mit wenigen Umdrehungen ein ausreichender Eingriff des jeweils gewünschten Kopplungselements mit dem Innengewinde der Andruckhülse bewirkt werden. Bei der Verwendung eines Kolbenadapters kann mit einem geringen manuellen Betätigungsaufwand durch ein Verdrehen des Kolbenadapters in dem Innengewinde eine axiale Verlagerung des in den Fluidkanal ragenden Druckkolbens und eine entsprechende Veränderung des Einpressdrucks für das Reparaturfluid erzeugt werden. Bei der Verwendung eines Pumpenadapters kann mit wenigen Umdrehungen der Pumpenadapter vollständig in den Kopplungsabschnitt eingedreht und die in Richtung des Fluidkanalabschnitts vorspringende Kopplungsdichtung ausreichend druckfest an die Anlagefläche der Andruckhülse angedrückt werden.

Im Hinblick auf eine möglichst einfache Handhabung ist vorgesehen, dass die Anschlusseinrichtung des Pumpenadapters als Bestandteil einer Schnellkupplung für einen Pumpenschlauch ausgebildet ist. Auf diese Weise kann mit geringem Aufwand ein mit einem geeigneten Schnellkupplungsgegenstück ausgestatteter Pumpenschlauch mit der Anschlusseinrichtung des Pumpenadapters verbunden werden. Zweckmäßigerweise ist die Anschlusseinrichtung so ausgestaltet, dass die Anschlusseinrichtung ein Bestandteil einer standardisierten Schnellkupplung ist. Passende Schnellkupplungsgegenstücke sind handelsüblich und kostengünstig erhältlich und können mit dem Pumpenschlauch verbunden werden, sofern eine handelsübliche und für das Werkzeug verwendete Pumpe nicht bereits einen mit einem passenden Schnellkupplungsgegenstück ausgestatteten Pumpenschlauch aufweist.

Einer Ausgestaltung des Erfindungsgedankens zufolge ist vorgesehen, dass der Pumpenadapter an dem Abdichtungsende eine sich in radialer Richtung quer zu der axialen Richtung erstreckende und in Umfangsrichtung umlaufende Kreisringfläche aufweist, in welcher bei einer bestimmungsgemäßen Festlegung des Pumpenadapters in der Andruckhülse die Kopplungsdichtung angeordnet ist. Die Kreisringfläche des Pumpenadapters kann hinsichtlich ihrer Abmessungen und Ausrichtung an die Anlagefläche der Andruckhülse angepasst sein. Es kann zweckmäßig sein, dass der radiale Verlauf der Kreisringfläche und der Anlagefläche eine identische Ausrichtung relativ zu der axialen Richtung aufweisen. Es kann auch vorgesehen sein, dass der radiale Verlauf der Kreisringfläche relativ zu der Anlagefläche einen spitzen Winkel aufweist, sodass eine zwischen der Kreisringfläche und der Anlagefläche angeordnete Kopplungsdichtung beim Anpressen eine radiale Kraftwirkung beispielsweise radial nach innen oder radial nach außen erfährt, um die Dichtungswirkung zu erhöhen bzw. die Zuverlässigkeit der Dichtungswirkung zu verbessern.

Um die Montage der Kopplungsdichtung zu erleichtern und gleichzeitig eine zuverlässige Positionierung und Anordnung der Kopplungsdichtung an der Kreisringfläche zu verbessern kann vorgesehen sein, dass konzentrisch zu der Kreisringfläche in axialer Richtung zu dem Fluidkanalabschnitt hin vorspringend eine hülsenförmige Ausformung ausgebildet ist, deren Mantelfläche eine Anlagefläche für die Kopplungsdichtung bildet. Die Kupplungsdichtung ist zweckmäßigerweise als O-Ring-Dichtung ausgebildet und weist einen an die Mantelfläche der Ausformung angepassten Innendurchmesser auf, sodass die Kopplungsdichtung mit etwas Vorspannung über die hülsenförmige Ausformung geschoben und klemmend an der Mantelfläche festgelegt werden kann. Durch das Eindrehen des Pumpenadapters in den Kopplungsabschnitt kann dann die Kopplungsdichtung an die Anlagefläche der Andruckhülse angedrückt werden, ohne dass eine unerwünschte Verlagerung des Kopplungsdichtung während der Festlegung des Pumpenadapters an der Andruckhülse befürchtet werden müsste, da die Mantelfläche der hülsenförmigen Ausformung eine Zwangsführung für die Kopplungsdichtung bildet. Die hülsenförmige Ausformung kann eine in Umfangsrichtung durchgehend geschlossene Mantelfläche aufweisen oder aber mehrere konzentrisch angeordnete zungenförmige Mantelflächenelemente aufweisen, deren umhüllende Mantelfläche eine zylinderförmige Mantelfläche bildet.

Es kann optional auch vorgesehen sein, dass in der Kreisringfläche des Pumpenadapters und/oder der Anlagefläche der Andruckhülse eine Nut für die Kopplungsdichtung ausgebildet ist. Die Nut gibt die Anordnung und den Verlauf der Kopplungsdichtung in Umfangsrichtung vor. Dadurch kann verhindert werden, dass die Kopplungsdichtung bei dem Festlegen des Pumpenadapters in dem Kopplungsabschnitt und bei dem Zusammenpressen der Kreisringfläche und der Anlagefläche sich in radialer Richtung seitlich verlagert und dadurch die Dichtungswirkung beeinträchtigt wird. Auf Grund der durch die Nut bewirkten Zwangsführung für die Kopplungsdichtung kann eine Kopplungsdichtung aus einem Material mit einer vergleichsweise hohen Elastizität und Verformbarkeit verwendet werden.

Einer bevorzugten Ausgestaltung des Erfindungsgedankens zufolge ist vorgesehen, dass das Bearbeitungskopfsystem ein als Kolbenadapter ausgebildetes Kopplungselement mit einem Außengewindeabschnitt mit einem an das Innengewinde der Andruckhülse angepasstes Außengewinde aufweist, wobei der Kolbenadapter an einem Betätigungsende, welches bei einer bestimmungsgemäßen Festlegung in dem Kopplungsabschnitt der Andruckhülse dem Fluidkanalabschnitt abgewandt ist, einen Betätigungsabschnitt mit einem ein manuelles Verdrehen des Kolbenadapters erleichterndes Betätigungselement aufweist, welches in axialer Richtung über die Andruckhülse hinausragt, und wobei an einem dem Betätigungsende gegenüberliegenden Druckkolbenende des Kolbenadapters ein Druckkolben ausgebildet ist, der bei einer bestimmungsgemäßen Festlegung des Kolbenadapters in dem Kopplungsabschnitt von dem Kopplungsabschnitt aus in den Fluidkanalabschnitt hineinragt und sich bis zu der Kolbendichtung der Andruckhülse erstreckt, sodass eine reparaturfluiddichte Abdichtung eines der Austrittsöffnung zugewandten Endes des Fluidkanals gegenüber dem Kopplungsabschnitt bewirkt wird. Der Kolbenadapter kann einteilig ausgestaltet sein und mit üblichen Herstellungsverfahren aus Metall oder aus einem geeigneten Kunststoffmaterial hergestellt sein. Zusätzlich zu der in der Andruckhülse befindlichen Kolbendichtung wird keine weitere Dichtung zur Abdichtung des Kolbenadapters während der Durchführung eines manuell betätigten Reparaturverfahrens benötigt.

Der Druckkolben des Kolbenadapters kann durch Verdrehen des Kolbenadapters in axialer Richtung in dem Fluidkanal verlagert werden. Die Anlagefläche bildet dabei einen Anschlag für die axiale Verlagerung des Druckkolbens. Auf diese Weise kann ohne zusätzliche konstruktive Maßnahmen verhindert werden, dass der Druckkolben in dem Fluidkanal zu weit axial verlagert wird und beispielsweise über die Austrittsöffnung hinaus verlagert wird und dabei in Kontakt mit der zu reparierenden Glasscheibe kommen könnte, sodass der Druckkolben in den Bereich der Schadstelle und des darin eingepressten Reparaturfluids eindringen und die Reparatur dadurch beeinträchtigen könnte.

In besonders vorteilhafter Weise ist optional vorgesehen, dass das Bearbeitungskopfsystem für die Erzeugung eines Einpressdrucks des Reparaturfluids in die Schadstelle der Glasscheibe von mehr als 5,5 10⁵ Pa, vorzugsweise von mehr als 6 10⁵ Pa und besonders vorzugsweise von mehr als 6,5 10⁵ Pa eingerichtet und vorgesehen ist. Es hat sich gezeigt, dass sich zumindest bei einigen Schadenstypen von Schadstellen in Glasscheiben ein derart hoher Überdruck bei dem Einpressen des Reparaturfluids vorteilhaft auf das Eindringen des Reparaturfluids in die Schadstelle und auf das Verteilen des Reparaturfluids entlang von Spalten, Rissen und Frakturen innerhalb der Glasscheibe auswirkt. Untersuchungen haben ergeben, dass durch das Einpressen des Reparaturfluids mit einem derart hohen Einpressdruck der Anteil von reparierten Schadstellen, die nach der Reparatur noch optisch sichtbare Schadstellenbereiche aufweisen, erheblich reduziert werden kann. Insbesondere bei einer wiederholten Erzeugung von abwechselnd Überdruck und Unterdruck kann in fast allen Fällen eine vollständige und auch optisch einwandfreie Reparatur der Schadstelle erreicht werden. Zu diesem Zweck kann für unterschiedliche Schadstellentypen eine jeweils besonders geeignete Abfolge von Behandlungszeiten mit Überdruck und mit Unterdruck vorgegeben werden, wobei sowohl die jeweilige Behandlungsdauer als auch der jeweilige Überdruck und Unterdruck individuell vorgegeben werden können.

Diese Abfolge von Behandlungszeiten mit vorgegebener Dauer und vorgegebenem Druck kann sowohl bei einer manuellen Betätigung als auch bei einem automatisch betriebenen Reparaturverfahren durchgeführt werden. Dabei kann es zweckmäßig sein, wenn in dem Kolbenadapter ein Drucksensor so angeordnet ist, dass der mit dem Druckkolben des Kolbenadapters auf das Reparaturfluid erzeugte Einpressdruck erfasst und die Drucksensorwerte beispielsweise mit drahtlosen Datenübertragungsverfahren zu einem Anzeigegerät übertragen werden. Bei einer manuell betätigten Handpumpe, die mit dem Pumpenadapter verbunden ist, kann die Handpumpe den mit der Handpumpe erzeugten Druck anzeigen. Auch bei einer automatisch betreibbaren Druckluftpumpe kann der jeweils erzeugte Druck erfasst und angezeigt werden, gegebenenfalls auch kontrolliert und automatisch geregelt werden.

Nachfolgend werden exemplarische Ausführungsbeispiele des Erfindungsgedankens näher erläutert, die in den Zeichnungen schematisch dargestellt sind. Es zeigt:
Fig. 1 eine schematische Übersicht über ein Werkzeugsystem mit einem Haltekörper, mit einer Andruckhülse, mit einem Kolbenadapter, mit einem Pumpenadapter, mit einem Pumpenschlauch, mit einer Handpumpe und mit einer Druckluftpumpe,
Fig. 2 eine Schnittansicht der in Fig. 1 gezeigten Andruckhülse,
Fig. 3 eine Schnittansicht des in Fig. 1 gezeigten Kolbenadapters,
Fig. 4 eine Schnittansicht des in Fig. 1 gezeigten Pumpenadapters,
Fig. 5 eine perspektivische Ansicht des in Fig. 1 und Fig. 4 gezeigten Pumpenadapters,
Fig. 6 eine Schnittansicht durch einen an eine Schadstelle in einer Glasscheibe angedrückten Bearbeitungskopf mit der Andruckhülse und mit dem Pumpenadapter, und
Fig. 7 eine Schnittansicht durch einen an eine Schadstelle in einer Glasscheibe angedrückten Bearbeitungskopf mit der Andruckhülse und mit dem Kolbenadapter.

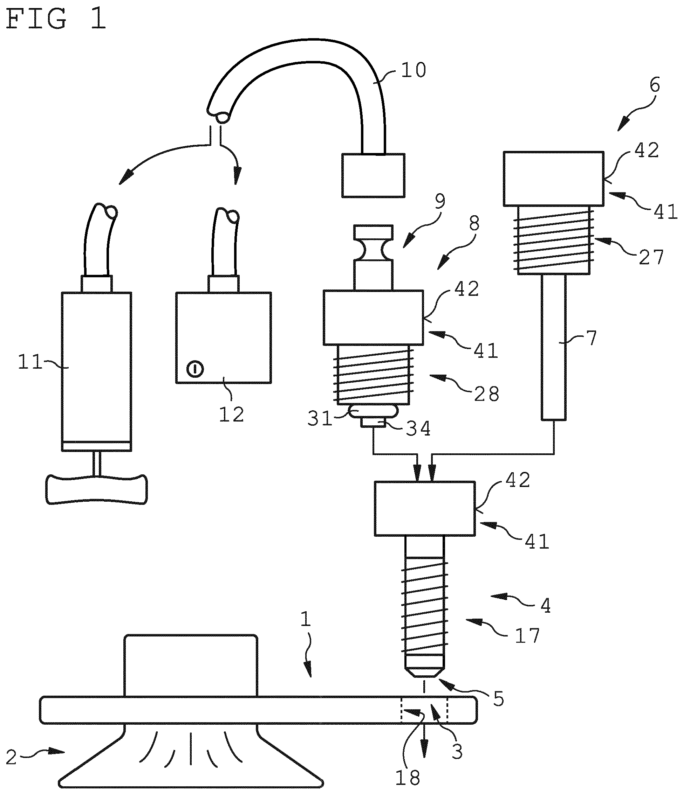

Ein in Fig. 1 schematisch dargestelltes Werkzeugsystem für ein Werkzeug zur Reparatur einer Schadstelle in einer Glasscheibe weist verschiedene Komponenten auf, von denen einige jeweils alternativ verwendet und individuell während der Durchführung eines Reparaturverfahrens für eine Schadstelle ausgewählt werden können, während andere Komponenten für alle verschiedenen Reparaturverfahren verwendet werden können.

Das Werkzeugsystem weist einen Haltekörper 1 mit einer Ansaugeinrichtung 2 auf, mit welchem der Haltekörper 1 auf der Oberfläche einer Glasscheibe angesaugt und festgelegt werden kann. Der Haltekörper 1 weist beabstandet zu der Ansaugeinrichtung 2 eine Bohrung 3 auf, in welcher eine Andruckhülse 4 festgelegt und dadurch mit einer Austrittöffnung 5 der Andruckhülse 4 an die Oberfläche der Glasscheibe angedrückt werden kann.

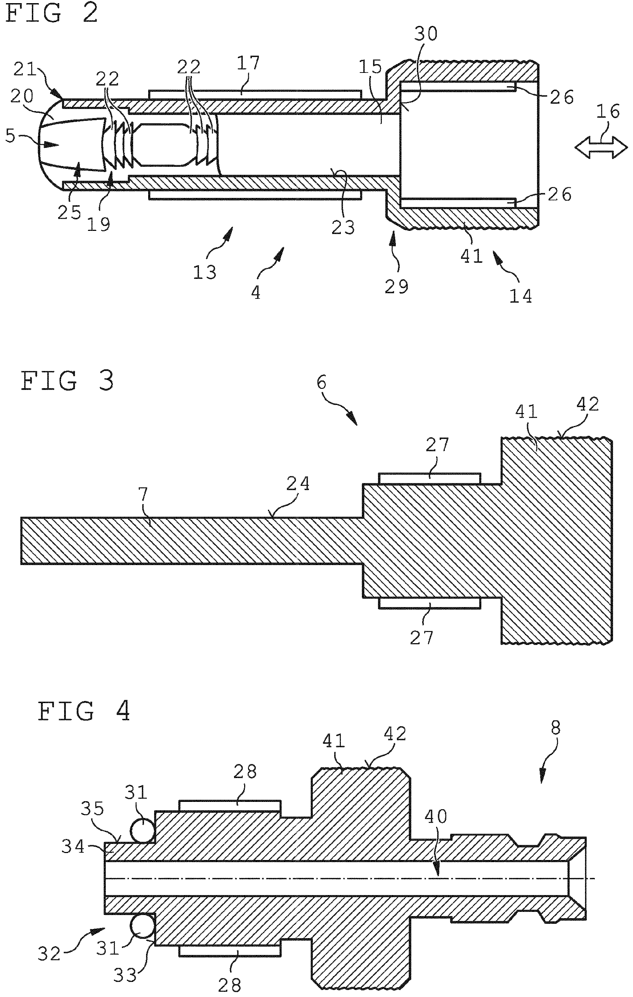

Das Werkzeugsystem weist einen Kolbenadapter 6 mit einem Druckkolben 7 auf, der in die Andruckhülse 4 eingeführt werden kann und darin axial verlagerbar gelagert ist. Das Werkzeugsystem weist weiterhin einen Pumpenadapter 8 mit einer Anschlusseinrichtung 9 für einen Pumpenschlauch 10 auf. Die Andruckhülse 4, der Kolbenadapter 6 und der Pumpenadapter 8 sind in den Fig. 2 bis 5 gezeigt und werden nachfolgend noch näher erläutert.

Das Werkzeugsystem weist weiterhin neben dem Pumpenschlauch 10 auch eine manuell betätigbare Handpumpe 11 und eine automatisch betreibbare Druckluftpumpe 12 auf, die wahlweise über den Pumpenschlauch 10 mit dem Pumpenadapter 8 verbunden und während der Durchführung eines Reparaturverfahrens für die Erzeugung von Überdruck oder Unterdruck verwendet werden können.

Ein Werkzeugsystem kann mit allen diesen Komponenten für die Durchführung von Reparaturen von Schadstellen in Glasscheiben angeboten bzw. bereitgehalten werden. Es ist auch möglich, dass lediglich ein Werkzeugsystem ohne Kolbenadapter 6 und mit nur einer Luftpumpe 11, 12 oder ein Werkzeugsystem ohne Pumpenadapter 8 und ohne Luftpumpen 11, 12 angeboten oder für eine Reparatur bereitgehalten wird.

Die in Fig. 2 in einer Schnittansicht dargestellte Andruckhülse 4 weist einen Fluidkanalabschnitt 13 auf, der sich von der Austrittsöffnung 5 bis zu einem Kopplungsabschnitt 14 erstreckt. In dem Fluidkanalabschnitt 13 verläuft in der Andruckhülse 4 ein Fluidkanal 15 in einer axialen Richtung 16, die durch einen Richtungspfeil 16 angedeutet ist, von dem Kopplungsabschnitt 14 bis zu der Austrittsöffnung 5. In dem Fluidkanalabschnitt 13 ist an einer Außenseite der Andruckhülse 4 ein Außengewindeabschnitt mit einem Außengewinde 17 ausgebildet, welches an ein Innengewinde 18 in der Bohrung 3 des Haltekörpers 1 angepasst ist, sodass die Andruckhülse 4 in die Bohrung 3 des Haltekörpers 1 eingeschraubt und darin festgelegt werden kann.

Im Bereich der Austrittsöffnung 5 ist in dem Fluidkanal 15 eine Kolbendichtung 19 angeordnet. Die Kolbendichtung 19 weist eine in der axialen Richtung 16 vorspringende Andruckdichtungslippe 20 auf, welche einen Öffnungsrand 21 der Austrittsöffnung 5 umgreift und bei einem Andrücken der Austrittsöffnung 5 an die Oberfläche einer Glasscheibe einen Spalt zwischen der Austrittsöffnung 5 und der Oberfläche der Glasscheibe abdichtet. Die Kolbendichtung 19 weist weiterhin mehrere in Umfangsrichtung umlaufend ausgebildete Dichtungslamellen 22 auf. Mit diesen Dichtungslamellen 22 kann ein Ringspalt zwischen einer Innenwand 23 des Fluidkanals 15 und einer Außenwand 24 des Druckkolbens 7 des in Fig. 3 gezeigten Kolbenadapters 6 zuverlässig abgedichtet werden. Zwischen der Andruckdichtungslippe 20 und einer der Austrittsöffnung 5 zugewandten ersten Dichtungslamelle 22 ist ein mit einem Reparaturfluid befüllbarer Vorratsraum 25 ausgebildet.

Die Andruckhülse 4 weist in dem Kopplungsabschnitt 14 ein Innengewinde 26 auf, sodass der Kolbenadapter 6 oder der Pumpenadapter 8 mit einem jeweils daran angepassten Außengewinde 27, 28 schraubend in den Kopplungsabschnitt 14 eingeführt und darin verlagert bzw. festgelegt werden können. Das Innengewinde 26 ist als mehrgängiges Gewinde ausgebildet. Ein Innendurchmesser des Innengewindes 26 in dem Kopplungsabschnitt 14 ist zumindest in einem Übergangsbereich 29 zwischen dem Fluidkanalabschnitt 13 und dem Kopplungsabschnitt 14 größer als ein Innendurchmesser des Fluidkanals 15 in dem Fluidkanalabschnitt 13.

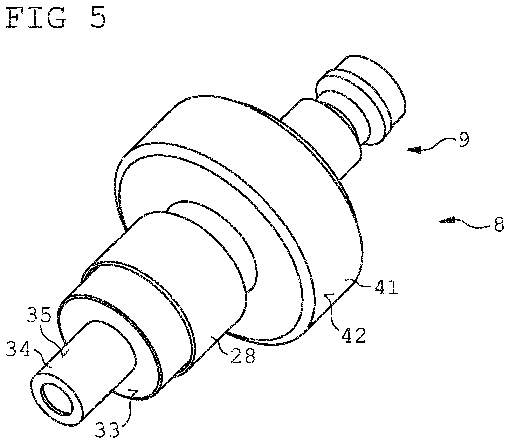

In dem Übergangsbereich 29 weist die Andruckhülse 4 eine in Umfangsrichtung umlaufend ausgebildete kreisringförmige Anlagefläche 30 auf, die dem Kopplungsabschnitt 14 zugewandt ist und einen Dichtungssitz für eine Kopplungsdichtung 31 bildet, die an einem Abdichtungsende 32 des auch in den Fig. 4 und 5 gezeigten Pumpenadapters 8 angeordnet ist und bei einer Festlegung des Pumpenadapters 8 in dem Kopplungsabschnitt 14 der Andruckhülse 4 in Richtung des Fluidkanalabschnitts 13 der Andruckhülse 4 vorspringt. Sobald der Pumpenadapter 8 bei einer bestimmungsgemäßen Verwendung mit seinem Außengewinde 28 in das Innengewinde 26 des Kopplungsabschnitts 14 der Andruckhülse 4 eingeschraubt ist, wird die als O-Ring-Dichtung ausgebildete Kopplungsdichtung 31 zwischen der Anlagefläche 30 und dem Abdichtungsende 32 des Pumpenadapters 8 zusammengepresst und dichtet in dem Übergangsbereich 29 einen Spalt zwischen dem Abdichtungsende 32 des Pumpenadapters 8 und der Anlagefläche 30 der Andruckhülse 4 zuverlässig und druckdicht ab.

Der in den Fig. 4 und 5 dargestellte Pumpenadapter 8 weist an dem Abdichtungsende 32 eine sich in radialer Richtung quer zu der axialen Richtung 16 erstreckende und in Umfangsrichtung umlaufende Kreisringfläche 33 aufweist, in welcher bei einer bestimmungsgemäßen Festlegung des Pumpenadapters 8 in der Andruckhülse 4 die Kopplungsdichtung 31 angeordnet ist. Konzentrisch zu der Kreisringfläche 33 ist in der axialen Richtung 16 zu dem Fluidkanalabschnitt 13 hin vorspringend eine hülsenförmige Ausformung 34 ausgebildet ist, deren Mantelfläche 35 eine Anlagefläche für die Kopplungsdichtung 31 bildet. Die Kopplungsdichtung 31 ist in Fig. 5 nicht dargestellt.

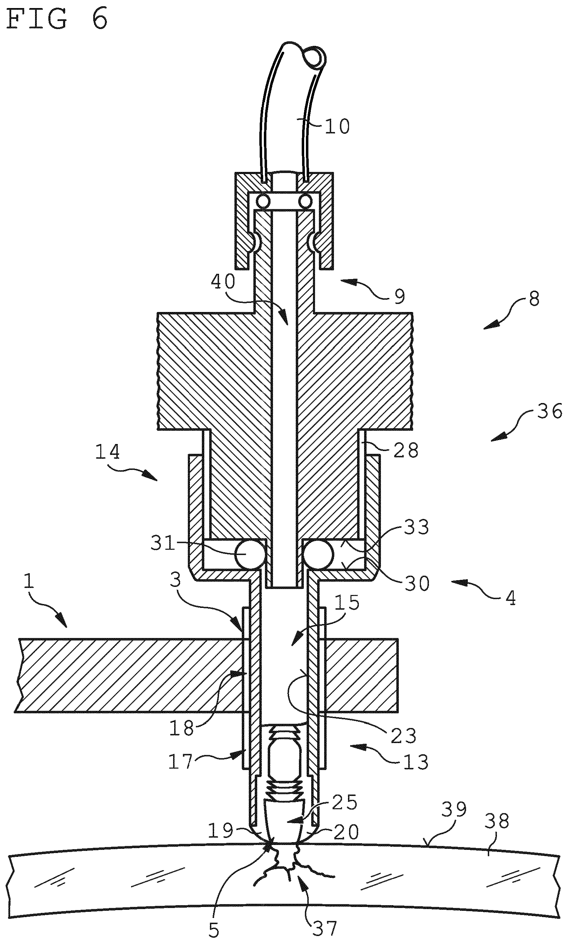

In Fig. 6 ist eine Variante eines Bearbeitungskopfes 36 gezeigt, der eine Kombination der Andruckhülse 4 mit dem Pumpenadapter 8 aufweist und die Durchführung des Reparaturverfahrens mit einer Luftpumpe ermöglicht. Der Pumpenadapter 8 ist so weit in den Kopplungsabschnitt 14 der Andruckhülse 4 eingeschraubt, sodass die Kopplungsdichtung 31 zwischen der Kreisringfläche 33 an dem Abdichtungsende 32 des Pumpenadapters 8 und der Anlagefläche 30 der Andruckhülse 4 zusammengepresst wird und den dort ausgebildeten Spalt druckdicht abdichtet.

Die Andruckhülse 4 wird zu Beginn des Reparaturverfahrens in dem Haltekörper 1 angeordnet und so festgelegt, dass die Austrittsöffnung 5 über einer Schadstelle 37 in einer Glasscheibe 38 an deren Oberfläche 39 angedrückt wird und mit der Kolbendichtung 19 ein Spalt zwischen der Austrittsöffnung 5 und der Oberfläche 39 der Glasscheibe 38 abgedichtet ist. Bevor der Pumpenadapter 8 mit der Andruckhülse 4 verbunden wird, oder bevor der Pumpenschlauch 10 an der als Bestandteil einer Schnellkupplung ausgebildeten Anschlusseinrichtung 9 des bereits in der Andruckhülse 4 befestigten Pumpenadapters 8 festgelegt wird, kann ein geeignetes Reparaturfluid von einem der Glasscheibe 38 abgewandten Ende durch den Fluidkanal 15 der Adapterhülse 4 bzw. gegebenenfalls durch einen Druckluftkanal 40 in dem Pumpenadapter 8 eingefüllt werden und läuft durch den Fluidkanal 15 bis in den Vorratsraum 25 in der Kolbendichtung 19. Anschließend wird gegebenenfalls der Pumpenadapter 8 noch in die Andruckhülse 4 eingeschraubt und der Pumpenschlauch 10 an der Anschlusseinrichtung 9 festgelegt. In Abhängigkeit von der mit dem Pumpenschlauch 10 verbundenen Luftpumpe, entweder die manuell betätigbare Handpumpe 11 und die automatisch betreibbare Druckluftpumpe 12, kann dann das Reparaturverfahren durch manuelle Betätigung der Handpumpe 11 oder bei Verwendung der automatisch betreibbaren Druckluftpumpe 12 eine vorab vorgegebene Abfolge von Behandlungszeiten und Drücken erzeugt und dadurch das Reparaturfluid in die Schadstelle 37 eingepresst sowie eventuelle Lufteinschlüsse aus der Schadstelle 37 abgesaugt werden.

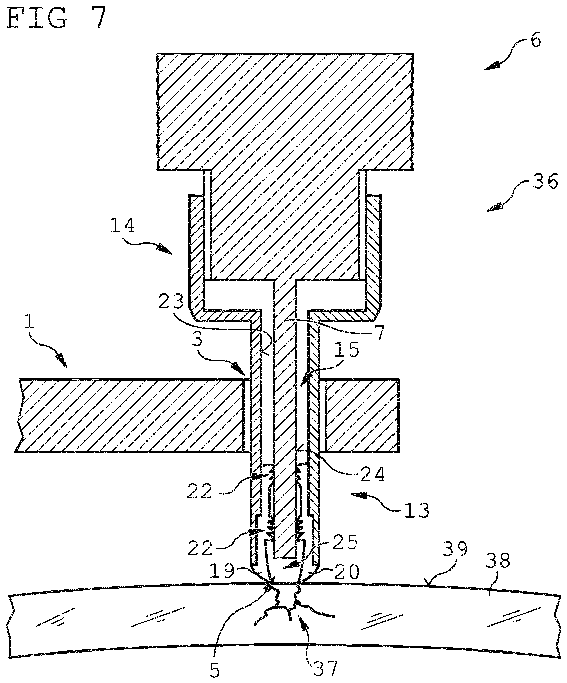

In Fig. 7 ist eine andere Variante des Bearbeitungskopfes 36 gezeigt, bei welcher die Andruckhülse 4 mit dem Kolbenadapter 6 kombiniert ist. Der Kolbenadapter 6 wird mit dem Außengewinde 27 in das Innengewinde 26 der Andruckhülse 4 eingeschraubt, sodass der Druckkolben 7 des Kolbenadapters 6 von dem Kopplungsabschnitt 14 aus durch den Fluidkanal 15 des Fluidkanalabschnitts 13 bis in die Kolbendichtung 19 hineinragt. Bevor der Bearbeitungskopf 36 bzw. die Andruckhülse 4 in die Bohrung 3 des Haltekörpers 1 eingeführt und mit der Austrittsöffnung 5 an die Oberfläche 39 der Glasscheibe 38 angedrückt wird, kann das Reparaturfluid durch die Austrittsöffnung 5 in den Vorratsraum 25 der Kolbendichtung 19 eingefüllt werden. Um das Reparaturfluid aus dem Vorratsraum 25 heraus in die Schadstelle 37 einzupressen kann der Druckkolben 7 durch Verdrehen des Kolbenadapters 6 relativ zu der Andruckhülse 4 in der axialen Richtung 16 hin und her verlagert werden und dadurch ein Überdruck oder ein Unterdruck in dem Vorratsraum 25 der Kolbendichtung 19 erzeugt und auf das Reparaturfluid ausgeübt werden.

Sowohl die Andruckhülse 4 als auch der Kolbenadapter 6 und der Pumpenadapter 8 weisen jeweils ein zylinderförmiges Betätigungselement 41 mit einer Mantelfläche auf, die für eine einfache und zuverlässige Handhabung eine dreidimensional strukturierte oder eine mit einer rutschhemmenden Beschichtung versehene Oberfläche 42 aufweist.

Es wird als ein großer Vorteil der Erfindung angesehen, dass das Werkzeugsystem einen Haltekörper 1 mit einer Ansaugeinrichtung 2 und eine Andruckhülse 4 aufweist, die sowohl mit Hilfe des Kolbenadapters 6 für eine manuelle Betätigung des Bearbeitungskopfes 36 als auch mit Hilfe des Pumpenadapters 8 mit einer manuell betätigten Handpumpe 11 oder mit automatisch betriebenen Druckluftpumpe 12 für die Durchführung eines Reparaturverfahrens verwendet werden können.

## Patentansprüche

1. Bearbeitungskopfsystem mit einer Andruckhülse (4) für einen Bearbeitungskopf (36) zum Einpressen eines Reparaturfluids in eine Schadstelle (37) einer Glasscheibe (38), wobei die an der Schadstelle (37) an die Glasscheibe (38) andrückbare Andruckhülse (4) in einer axialen Richtung (16) hintereinander angeordnet einen Fluidkanalabschnitt (13) und einen Kopplungsabschnitt (14) aufweist, wobei die Andruckhülse (4) im Bereich des Fluidkanalabschnitts (13) ein Befestigungsmittel zum lösbaren Festlegen der Andruckhülse (4) an oder in einem an der Glasscheibe (38) festlegbaren Haltekörper (1) aufweist, wobei sich in dem Fluidkanalabschnitt (13) ein Fluidkanal (15) in der axialen Richtung (16) von dem Kopplungsabschnitt (14) bis zu einer dem Kopplungsabschnitt (14) gegenüberliegenden und an die Glasscheibe (38) andrückbaren Austrittsöffnung (5) erstreckt, wobei in dem Fluidkanal (15) im Bereich der Austrittsöffnung (5) eine Kolbendichtung (19) angeordnet ist, mit welcher ein von dem Kopplungsabschnitt (14) durch den Fluidkanal (15) in Richtung der Austrittsöffnung (5) hindurchragender Druckkolben (7) reparaturfluiddicht zu dem umgebenden Fluidkanal (15) abdichtbar ist, wobei die Andruckhülse (4) in dem Kopplungsabschnitt (14) einen Innengewindeabschnitt mit einem Innengewinde (26) aufweist, sodass ein Kopplungselement (6, 8) mit einem daran angepassten Außengewinde (27, 28) mit dem Innengewinde (26) in Eingriff bringbar ist und durch Verdrehen in der axialen Richtung (16) verlagerbar ist, wobei ein Innendurchmesser des Fluidkanals (15) an einem dem Kopplungsabschnitt (14) zugewandten Ende des Fluidkanalabschnitts (13) kleiner als ein Innendurchmesser des Innengewindes (26) in dem Kopplungsabschnitt (14) ist, und wobei die Andruckhülse (4) in einem Übergangsbereich (29) zwischen dem Fluidkanalabschnitt (13) und dem Kopplungsabschnitt (14) eine in Umfangsrichtung umlaufend ausgebildete Anlagefläche (30) aufweist, die dem Kopplungsabschnitt (14) zugewandt ist und einen Dichtungssitz für eine an einem Kopplungselement (6, 8) angeordnete, in Umfangsrichtung umlaufende und in Richtung des Fluidkanalabschnitts (13) vorspringende Kopplungsdichtung (31) bildet, wobei das Bearbeitungskopfsystem (36) ein als Pumpenadapter (8) ausgebildetes Kopplungselement (6, 8) mit einem Außengewindeabschnitt mit einem an das Innengewinde (26) der Andruckhülse (4) angepasstes Außengewinde (28) aufweist, **dadurch gekennzeichnet, dass** der Pumpenadapter (8) an einem Anschlussende, welches bei einer bestimmungsgemäßen Festlegung des Pumpenadapters (8) in dem Kopplungsabschnitt (14) dem Fluidkanalabschnitt (13) abgewandt ist und in axialer Richtung (16) über die Andruckhülse (4) hinausragt, eine Anschlusseinrichtung (9) zum druckfesten Festlegen eines Pumpenschlauchs (10) aufweist, und wobei der Pumpenadapter (8) an einem dem Anschlussende gegenüberliegenden Abdichtungsende (32), welches bei einer bestimmungsgemäßen Festlegung in dem Kopplungsabschnitt (14) der Andruckhülse (4) dem Fluidkanalabschnitt (13) zugewandt ist, eine in Richtung des Fluidkanalabschnitts (13) vorspringende und in Umfangsrichtung umlaufende Kopplungsdichtung (31) aufweist.

2. Bearbeitungskopfsystem nach Anspruch 1, **dadurch gekennzeichnet, dass** die Kolbendichtung (19) zwei oder mehr in Umfangsrichtung umlaufende und nach innen vorspringende Dichtungslamellen (22) aufweist.

3. Bearbeitungskopfsystem nach Anspruch 2, **dadurch gekennzeichnet, dass** die Kolbendichtung (19) eine Andruckdichtungslippe (20) aufweist, welche einen Öffnungsrand (21) der Austrittsöffnung (5) umgreift und beabstandet zu einer der Austrittsöffnung (5) zugewandten ersten Dichtungslamelle (22) angeordnet ist, sodass zwischen der Andruckdichtungslippe (20) und der ersten Dichtungslamelle (22) ein mit dem Reparaturfluid befüllbarer Vorratsraum (25) gebildet wird.

4. Bearbeitungskopfsystem nach einem der voranstehenden Ansprüche, **dadurch gekennzeichnet, dass** das Innengewinde (26) in dem Innengewindeabschnitt des Kopplungsabschnitts (14) als mehrgängiges Innengewinde ausgebildet ist.

5. Bearbeitungskopfsystem nach einem der voranstehenden Ansprüche, **dadurch gekennzeichnet, dass** die Anschlusseinrichtung (9) des Pumpenadapters (8) als Bestandteil einer Schnellkupplung für einen Pumpenschlauch (10) ausgebildet ist.

6. Bearbeitungskopfsystem nach einem der voranstehenden Ansprüche, **dadurch gekennzeichnet, dass** der Pumpenadapter (8) an dem Abdichtungsende (32) eine sich in radialer Richtung quer zu der axialen Richtung erstreckende und in Umfangsrichtung umlaufende Kreisringfläche (33) aufweist, in welcher bei einer bestimmungsgemäßen Festlegung des Pumpenadapters (8) in der Andruckhülse (4) die Kopplungsdichtung (31) angeordnet ist.

7. Bearbeitungskopfsystem nach Anspruch 6, **dadurch gekennzeichnet, dass** konzentrisch zu der Kreisringfläche (33) in axialer Richtung (16) zu dem Fluidkanalabschnitt (13) hin vorspringend eine hülsenförmige Ausformung (34) ausgebildet ist, deren Mantelfläche (35) eine Anlagefläche für die Kopplungsdichtung (31) bildet.

8. Bearbeitungskopfsystem nach einem der Ansprüche 6 oder 7, **dadurch gekennzeichnet, dass** in der Kreisringfläche (33) des Pumpenadapters (8) und/oder der Anlagefläche (29) der Andruckhülse (4) eine Nut für die Kopplungsdichtung (31) ausgebildet ist.

9. Bearbeitungskopfsystem nach einem der voranstehenden Ansprüche, **dadurch gekennzeichnet, dass** das Bearbeitungskopfsystem ein als Kolbenadapter (6) ausgebildetes Kopplungselement (6, 8) mit einem Außengewindeabschnitt mit einem an das Innengewinde (26) der Andruckhülse (4) angepasstes Außengewinde (27) aufweist, wobei an einem dem Betätigungsende gegenüberliegenden Druckkolbenende des Kolbenadapters (6) ein Druckkolben (7) ausgebildet ist, der bei einer bestimmungsgemäßen Festlegung des Kolbenadapters (6) in dem Kopplungsabschnitt (14) von dem Kopplungsabschnitt (14) aus in den Fluidkanalabschnitt (13) hineinragt und sich bis zu der Kolbendichtung (19) der Andruckhülse (4) erstreckt, sodass eine reparaturfluiddichte Abdichtung eines der Austrittsöffnung (5) zugewandten Endes des Fluidkanals (15) gegenüber dem Kopplungsabschnitt (14) bewirkt wird.

10. Bearbeitungskopfsystem nach Anspruch 9, **dadurch gekennzeichnet, dass** der Kolbenadapter (6) an einem Betätigungsende, welches bei einer bestimmungsgemäßen Festlegung in dem Kopplungsabschnitt (14) der Andruckhülse (4) dem Fluidkanalabschnitt (13) abgewandt ist, einen Betätigungsabschnitt mit einem ein manuelles Verdrehen des Kolbenadapters erleichterndes Betätigungselement (41) aufweist, welches in axialer Richtung (16) über die Andruckhülse (4) hinausragt.

11. Bearbeitungskopfsystem nach einem der voranstehenden Ansprüche, **dadurch gekennzeichnet, dass** das Bearbeitungskopfsystem für die Erzeugung eines Einpressdrucks des Reparaturfluids in die Schadstelle (37) der Glasscheibe (38) von mehr als 5,5 10⁵ Pa, vorzugsweise von mehr als 6 10⁵ Pa und besonders vorzugsweise von mehr als 6,5 10⁵ Pa eingerichtet und vorgesehen ist.

## Claims

1. Processing head system with a pressure sleeve (4) for a processing head (36) for pressing a repair fluid into a damaged area (37) of a glass pane (38), wherein the pressure sleeve (4), which can be pressed against the glass pane (38) at the damaged area (37), comprises, arranged one behind the other in an axial direction (16), a fluid channel section (13) and a coupling section (14), wherein the pressure sleeve (4), in the region of the fluid channel section (13), has a fastening means for releasably fixing the pressure sleeve to or in a holding body (1) that can be fixed to the glass pane (38), wherein, in the fluid channel section (13), a fluid channel (15) extends in the axial direction (16) from the coupling section (14) to an outlet opening (5), which is opposite the coupling section (14) and can be pressed against the glass pane (38), wherein a piston seal (19) is arranged in the fluid channel (15) in the region of the outlet opening, by means of which a pressure piston (7) projecting from the coupling section (14) through the fluid channel (15) in the direction toward the outlet opening (5) can be sealed in a repair-fluid-tight manner with respect to the surrounding fluid channel (15), wherein the pressure sleeve (4), in the coupling section (14), has an internal thread section with an internal thread (26), such that a coupling element (6, 8) having an external thread (27, 28) adapted thereto can be brought into engagement with the internal thread (26) and can be displaced in the axial direction (16) by rotation, wherein an inner diameter of the fluid channel (15) at an end of the fluid channel section (13) facing the coupling section (14) is smaller than an inner diameter of the internal thread (26) in the coupling section (14), and wherein the pressure sleeve (4), in a transition region (29) between the fluid channel section (13) and the coupling section (14), has a circumferentially extending contact surface (30), which faces the coupling section (14) and forms a sealing seat for a circumferentially extending coupling seal (31), arranged on a coupling element (6, 8) and projecting in the direction of the fluid channel section (13), wherein the processing head system (36) has a coupling element (6, 8) designed as a pump adapter (8), with an external thread section having an external thread (28) adapted to the internal thread (26) of the pressure sleeve (4),
**characterized in that**
the pump adapter (8), at a connection end which, when the pump adapter (8) is fixed as intended in the coupling section (14), faces away from the fluid channel section (13) and projects beyond the pressure sleeve (4) in the axial direction (16), has a connection device (9) for pressure-tight fixing of a pump hose (10), and wherein the pump adapter (8), at a sealing end (32) opposite the connection end, which, when fixed as intended in the coupling section (14) of the pressure sleeve (4), faces the fluid channel section (13), has a coupling seal (31) projecting in the direction of the fluid channel section (13) and extending circumferentially.

2. Processing head system according to claim 1, **characterized in that** the piston seal (19) has two or more sealing lips (22) extending circumferentially and projecting inwardly.

3. Processing head system according to claim 2, **characterized in that** the piston seal (19) has a pressure sealing lip (20), which engages around an opening edge (21) of the outlet opening (5) and is arranged spaced apart from a first sealing lip (22) facing the outlet opening (5), such that a reservoir space (25), fillable with the repair fluid, is formed between the pressure sealing lip (20) and the first sealing lip (22).

4. Processing head system according to one of the preceding claims, **characterized in that** the internal thread (26) in the internal thread section of the coupling section (14) is designed as a multi-start internal thread.

5. Processing head system according to one of the preceding claims, **characterized in that** the connection device (9) of the pump adapter (8) is designed as part of a quick coupling for a pump hose (10).

6. Processing head system according to one of the preceding claims, **characterized in that** the pump adapter (8), at the sealing end (32), has an annular surface (33) extending in a radial direction transversely to the axial direction and circumferentially, in which the coupling seal (31) is arranged when the pump adapter (8) is fixed as intended in the pressure sleeve (4).

7. Processing head system according to claim 6, **characterized in that**, concentrically with the annular surface (33), a sleeve-shaped formation (34) is formed projecting in the axial direction (16) toward the fluid channel section (13), the lateral surface (35) of which forms a contact surface for the coupling seal (31).

8. Processing head system according to one of claims 6 or 7, **characterized in that** a groove for the coupling seal (31) is formed in the annular surface (33) of the pump adapter (8) and/or the contact surface (29) of the pressure sleeve (4).

9. Processing head system according to one of the preceding claims, **characterized in that** the processing head system has a coupling element (6, 8) designed as a piston adapter (6), with an external thread section having an external thread (27) adapted to the internal thread (26) of the pressure sleeve (4), wherein a pressure piston (7) is formed at a pressure piston end of the piston adapter (6) opposite an actuating end, said pressure piston, when the piston adapter (6) is fixed as intended in the coupling section (14), projects from the coupling section (14) into the fluid channel section (13) and extends up to the piston seal (19) of the pressure sleeve (4), such that a repair-fluid-tight sealing of an end of the fluid channel (15) facing the outlet opening (5) relative to the coupling section (14) is effected.

10. Processing head system according to claim 9, **characterized in that** the piston adapter (6), at an actuating end which, when fixed as intended in the coupling section (14) of the pressure sleeve (4), faces away from the fluid channel section (13), has an actuating section with an actuating element (41) facilitating manual rotation of the piston adapter, said actuating element projecting beyond the pressure sleeve (4) in the axial direction (16).

11. Processing head system according to one of the preceding claims, **characterized in that** the processing head system is configured and intended for generating an injection pressure of the repair fluid into the damaged area (37) of the glass pane (38) of more than 5.5 × 10⁵ Pa, preferably more than 6 × 10⁵ Pa, and particularly preferably more than 6.5 × 10⁵ Pa.

## Revendications

1. Système de tête de traitement avec une douille de pression (4) pour une tête de traitement (36) destinée à presser un fluide de réparation dans une zone endommagée (37) d'une vitre (38), la douille de pression (4), qui peut être pressée contre la vitre (38) au niveau de la zone endommagée (37), présentant, disposés successivement dans une direction axiale (16), une section de canal de fluide (13) et une section de couplage (14), la douille de pression (4) présentant, dans la zone de la section de canal de fluide (13), un moyen de fixation pour fixer de manière amovible la douille de pression sur ou dans un corps de support (1) pouvant être fixé sur la vitre (38), un canal de fluide (15) s'étendant dans la section de canal de fluide (13), dans la direction axiale (16), depuis la section de couplage (14) jusqu'à une ouverture de sortie (5), opposée à la section de couplage (14) et pouvant être pressée contre la vitre (38), un joint de piston (19) étant disposé dans le canal de fluide (15) dans la zone de l'ouverture de sortie, au moyen duquel un piston de pression (7), faisant saillie depuis la section de couplage (14) à travers le canal de fluide (15) en direction de l'ouverture de sortie (5), peut être étanchéifié de manière étanche au fluide de réparation par rapport au canal de fluide (15) environnant, la douille de pression (4) présentant, dans la section de couplage (14), une section à filetage intérieur avec un filetage intérieur (26), de sorte qu'un élément de couplage (6, 8) avec un filetage extérieur (27, 28) adapté à celui-ci peut être mis en prise avec le filetage intérieur (26) et déplacé dans la direction axiale (16) par rotation, un diamètre intérieur du canal de fluide (15) à une extrémité de la section de canal de fluide (13) tournée vers la section de couplage (14) étant inférieur à un diamètre intérieur du filetage intérieur (26) dans la section de couplage (14), et la douille de pression (4) présentant, dans une zone de transition (29) entre la section de canal de fluide (13) et la section de couplage (14), une surface d'appui (30) formée de manière circonférentielle, tournée vers la section de couplage (14) et formant un siège d'étanchéité pour un joint de couplage (31), disposé sur un élément de couplage (6, 8), s'étendant de manière circonférentielle et faisant saillie dans la direction de la section de canal de fluide (13), le système de tête de traitement (36) comprenant un élément de couplage (6, 8) conçu comme un adaptateur de pompe (8), avec une section à filetage extérieur comportant un filetage extérieur (28) adapté au filetage intérieur (26) de la douille de pression (4),
**caractérisé en ce que**
l'adaptateur de pompe (8), à une extrémité de raccordement qui, lors d'une fixation conforme de l'adaptateur de pompe (8) dans la section de couplage (14), est tournée à l'opposé de la section de canal de fluide (13) et fait saillie au-delà de la douille de pression (4) dans la direction axiale (16), présente un dispositif de raccordement (9) pour la fixation étanche à la pression d'un tuyau de pompe (10), et l'adaptateur de pompe (8), à une extrémité d'étanchéité (32) opposée à l'extrémité de raccordement, qui, lors d'une fixation conforme dans la section de couplage (14) de la douille de pression (4), est tournée vers la section de canal de fluide (13), présente un joint de couplage (31) faisant saillie dans la direction de la section de canal de fluide (13) et s'étendant de manière circonférentielle.

2. Système de tête de traitement selon la revendication 1, **caractérisé en ce que** le joint de piston (19) présente deux ou plusieurs lèvres d'étanchéité (22) s'étendant de manière circonférentielle et faisant saillie vers l'intérieur.

3. Système de tête de traitement selon la revendication 2, **caractérisé en ce que** le joint de piston (19) présente une lèvre d'étanchéité de pression (20), qui entoure un bord d'ouverture (21) de l'ouverture de sortie (5) et est disposée à distance d'une première lèvre d'étanchéité (22) tournée vers l'ouverture de sortie (5), de sorte qu'un espace de réserve (25) pouvant être rempli avec le fluide de réparation est formé entre la lèvre d'étanchéité de pression (20) et la première lèvre d'étanchéité (22).

4. Système de tête de traitement selon l'une des revendications précédentes, **caractérisé en ce que** le filetage intérieur (26) dans la section à filetage intérieur de la section de couplage (14) est conçu comme un filetage intérieur à plusieurs filets.

5. Système de tête de traitement selon l'une des revendications précédentes, **caractérisé en ce que** le dispositif de raccordement (9) de l'adaptateur de pompe (8) est conçu comme partie constitutive d'un raccord rapide pour un tuyau de pompe (10).

6. Système de tête de traitement selon l'une des revendications précédentes, **caractérisé en ce que** l'adaptateur de pompe (8), à l'extrémité d'étanchéité (32), présente une surface annulaire (33) s'étendant dans une direction radiale transversalement à la direction axiale et de manière circonférentielle, dans laquelle le joint de couplage (31) est disposé lors d'une fixation conforme de l'adaptateur de pompe (8) dans la douille de pression (4).

7. Système de tête de traitement selon la revendication 6, **caractérisé en ce qu'**une formation en forme de douille (34), faisant saillie de manière concentrique par rapport à la surface annulaire (33) dans la direction axiale (16) vers la section de canal de fluide (13), est formée, dont la surface latérale (35) constitue une surface d'appui pour le joint de couplage (31).

8. Système de tête de traitement selon l'une des revendications 6 ou 7, **caractérisé en ce qu'**une rainure pour le joint de couplage (31) est formée dans la surface annulaire (33) de l'adaptateur de pompe (8) et/ou dans la surface d'appui (29) de la douille de pression (4).

9. Système de tête de traitement selon l'une des revendications précédentes, **caractérisé en ce que** le système de tête de traitement comprend un élément de couplage (6, 8) conçu comme un adaptateur de piston (6), avec une section à filetage extérieur comportant un filetage extérieur (27) adapté au filetage intérieur (26) de la douille de pression (4), un piston de pression (7) étant formé à une extrémité de piston de pression de l'adaptateur de piston (6), opposée à une extrémité d'actionnement, lequel piston de pression, lors d'une fixation conforme de l'adaptateur de piston (6) dans la section de couplage (14), fait saillie depuis la section de couplage (14) dans la section de canal de fluide (13) et s'étend jusqu'au joint de piston (19) de la douille de pression (4), de sorte qu'une étanchéité étanche au fluide de réparation d'une extrémité du canal de fluide (15) tournée vers l'ouverture de sortie (5) par rapport à la section de couplage (14) est obtenue.

10. Système de tête de traitement selon la revendication 9, **caractérisé en ce que** l'adaptateur de piston (6), à une extrémité d'actionnement qui, lors d'une fixation conforme dans la section de couplage (14) de la douille de pression (4), est tournée à l'opposé de la section de canal de fluide (13), présente une section d'actionnement avec un élément d'actionnement (41) facilitant la rotation manuelle de l'adaptateur de piston, lequel élément d'actionnement fait saillie au-delà de la douille de pression (4) dans la direction axiale (16).

11. Système de tête de traitement selon l'une des revendications précédentes, **caractérisé en ce que** le système de tête de traitement est conçu et prévu pour la génération d'une pression d'injection du fluide de réparation dans la zone endommagée (37) de la vitre (38) de plus de 5,5 × 10⁵ Pa, de préférence de plus de 6 × 10⁵ Pa et particulièrement de préférence de plus de 6,5 × 10⁵ Pa.
